# EUROPEAN PATENT APPLICATION

(11) **EP 1 764 939 A1**
(43) Date of publication of application: **21.03.2007**
(21) Application number: 05766448.4
(22) Date of filing: 21.07.2005
(51) Int. Cl.: H04J 11/00

(54) **OFDM TRANSMITTING APPARATUS, OFDM RECEIVING APPARATUS, AND THEIR METHODS**

(30) Priority: 02.08.2004 JP 2004225676
(71) Applicant: MATSUSHITA ELECTRIC INDUSTRIAL CO., LTD., Osaka 571-8501 (JP)
(72) Inventor: MATSUMOTO, Atsushi Matsushita Electric Ind.Co.,Ltd, Chuo-ku, Osaka-shi, Osaka 540-6319 (JP); FUKUOKA, Masaru Matsushita Electric Ind.Co.,Ltd., Chuo-ku, Osaka-shi, Osaka 540-6319 (JP); NISHIO, Akihiko Matsushita Electric Ind.Co.,Ltd., Chuo-ku, Osaka-shi, Osaka 540-6319 (JP)
(74) Representative: Grünecker, Kinkeldey, Stockmair & Schwanhäusser Anwaltssozietät
(86) International application number: PCT/JP2005/013388
(87) International publication number: WO 2006/013729

(57) **Abstract**

An OFDM transmitting apparatus capable of preventing any degradation of the throughput of the communication system without assigning any resources of the communication system for transmission of a control channel. In the apparatus, a switch (121) selectively supplies, based on the encoded data of the control channel outputted from an encoding part (110), a plurality of outputs from a repetition part (103) to pattern generating parts (122-1 to 122-2). In this way, a plurality of types of repetition patterns can be used to generate outbound data. An assigning part (123) maps the outbound data generated by one of the pattern generating parts to a subcarrier.

## Description

### Technical Field

The present invention relates to an OFDM transmitting apparatus that performs wireless transmissions using an OFDM (Orthogonal Frequency Division Multiplexing) scheme, an OFDM receiving apparatus compatible therewith, and methods for these.

### Background Art

In recent years, in addition to sound, a variety of information such as images and text files are subject for transmission in mobile telecommunications. In association to that, the need for highly reliable and high-speed transmission has further increased. However, when high-speed transmission is performed in mobile telecommunications, the affect of delay waves caused by multi-paths cannot be ignored, and transmission characteristics degrade by frequency selective fading.

Multicarrier communications, as represented by the OFDM scheme, are gaining attention as one countermeasure technology for frequency selective fading. Multicarrier communication is a technology for high-speed transmission wherein data is transmitted using a plurality of subcarriers whose transmission speed is suppressed to the degree that frequency selective fading does not occur. Particularly, because the frequencies of a plurality of subcarriers where data is arranged are mutually orthogonal in the OFDM scheme, this scheme provides highest efficiency of frequency use in multicarrier communication and can be implemented using a comparatively simple hardware configuration. For that reason, the OFDM scheme is gaining attention as a candidate for a communication scheme employed by the fourth generation of mobile telecommunications, and has been studied from various perspectives.

A conventional OFDM transmitting apparatus is disclosed in patent document 1, for example. This OFDM transmitting apparatus selects a predetermined number of subcarriers from a plurality subcarriers and inserts a control channel required in transmission control for a data channel, into the selected subcarriers.
Patent Document 1: Japanese Patent Application Laid-Open No. 2001-203665

### Disclosure of the Invention

### Problems to be solved by the invention

However, the conventional OFDM transmitting apparatus assigns resources of the communication system separately to the data channel to transmit the control channel, so there is a problem that resources used in the data channel are consumed by this control channel. If the resources for the data channel are consumed by the control channel, there will not be enough resources to be assigned to the data channel which causes a drop in throughput of the communication system. The PDC (Personal Digital Cellular) system which has presently become a commercial service, and the third generation W-CDMA (Wideband - Code Division Multiple Access) are not communication systems that use the OFDM scheme, but the same problem can occur in these communication systems as well.

It is therefore an object of the present invention to provide an OFDM transmitting apparatus and OFDM receiving apparatus that do not assign resources of the communication system for use in transmission of the control channel to prevent a drop in throughput of the communication system, and methods for these.

### Means for solving the problem

In the OFDM scheme, as a countermeasure against reception errors, there is a technology called "repetition" whereby the same data symbol is replicated into a plurality of symbols and transmitted to a plurality of subcarriers after mapping. The OFDM transmitting apparatus of the present invention employs a configuration having: a determining section that determines a repetition pattern for first information according to content of second information; and a transmitting section that performs repetition of the first information in the repetition pattern and transmits the result. Here, the first information and the second information are, for example, information transmitted by the control channel and information transmitted by the data channel.

### Advantageous Effect of the invention

According to the present invention, it is possible to prevent a drop in through put of the communication system without assigning resources of the communication system for transmission of the control channel.

### Brief Description of Drawings

FIG. 1 is a block diagram showing a main configuration of a transmitting section according to a first embodiment;
FIG. 2 is a block diagram showing a main configuration in a mapping section according to the first embodiment;
FIG. 3A is a drawing showing an example of a repetition pattern generated by a pattern generation section according to the first embodiment;
FIG. 3B is a drawing showing an example of a repetition pattern generated by a pattern generation section according to the first embodiment;
FIG.4 is a drawing to explain how a transmission symbol is processed;
FIG. 5 is a block diagram showing a main configuration of a receiving section according to the first embodiment;
FIG. 6 is a block diagram showing a main configuration in a determining section according to the first embodiment;
FIG. 7 is a block diagram showing a main configuration in a combining section according to the first embodiment;
FIG. 8 is a drawing to explain a series of transmitting and receiving processes for data #2;
FIG. 9 is a block diagram showing a main configuration of a transmitting section and a receiving section according to a second embodiment;
FIG.10A is a drawing to explain in detail processes of a coding section according to the second embodiment;
FIG.10B is a drawing to explain in detail processes of a coding section according to the second embodiment;
FIG.11 is a drawing to explain how a transmission symbol is processed;
FIG.12 is a block diagram showing a main configuration of a transmitting section and a receiving section according to a third embodiment; and
FIG.13 is a block diagram showing a configuration of a signal generated by a coding section according to the third embodiment.

### Best Mode for Carrying Out the Invention

Embodiments of the present invention will be explained in detail with reference to the accompanying drawings.

### (Embodiment 1)

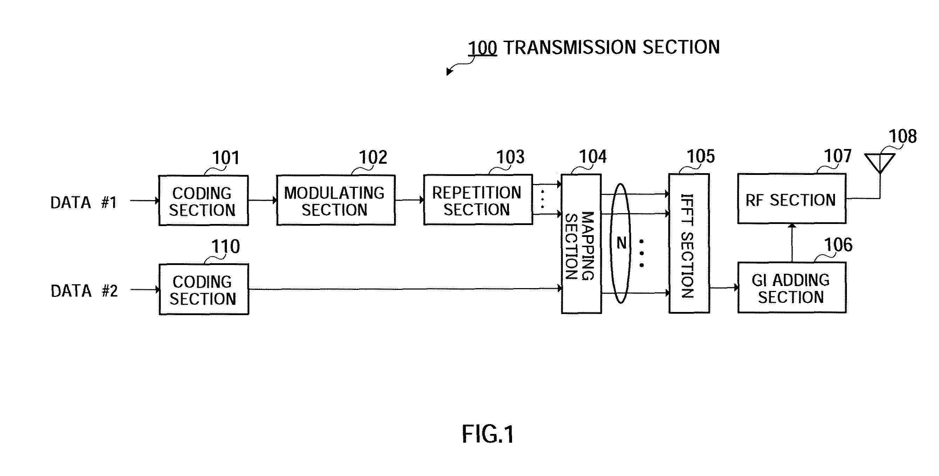

FIG.1 is a block diagram showing a main configuration of transmitting section 100 in an OFDM communication apparatus according to a first embodiment of the present invention.

Transmitting section 100 has : coding section 101; modulating section 102; repetition section 103; mapping section 104; IFFT section 105; GI adding section 106; RF section 107; antenna 108; and coding section 110, and performs wireless transmission processing of data #1 and data #2 that are transmission data. Here, data #1 is packet data, such as sound data, text data, and image data. Data #2 is data such as control information required in transmitting data #1, and this data is multiplexed upon data #1.

Each section of transmitting section 100 performs the following operations.

Coding section 101 codes data #1 such as by error correction. Coding section 110 codes data #2 such as by error correction and outputs the result to mapping section 104. Modulating section 102 modulates coded data outputted from coding section 101 such as by QPSK and 16QAM, and outputs the result to repetition section 103. Repetition section 103 generates a plurality of the same symbol by repeated processing for the modulated signal symbol, and outputs the symbols to mapping section 104.

Mapping section 104 arranges (maps) data outputted from repetition section 103 in a wireless transmission frame according to a plurality of pre-registered repetition patterns. This mapping process will be described in detail later.

IFFT section 105 performs inverse fast Fourier transform (IFFT) on the symbols arranged in the wireless frame and outputs the result to GI adding section 106. GI adding section 106 adds a guard interval to the wireless transmission frame and outputs the result to RF section 107. RF section 107 performs predetermined wireless processes such as up-conversion to signal outputted from GI adding section 106, and transmits this by wireless via antenna 108.

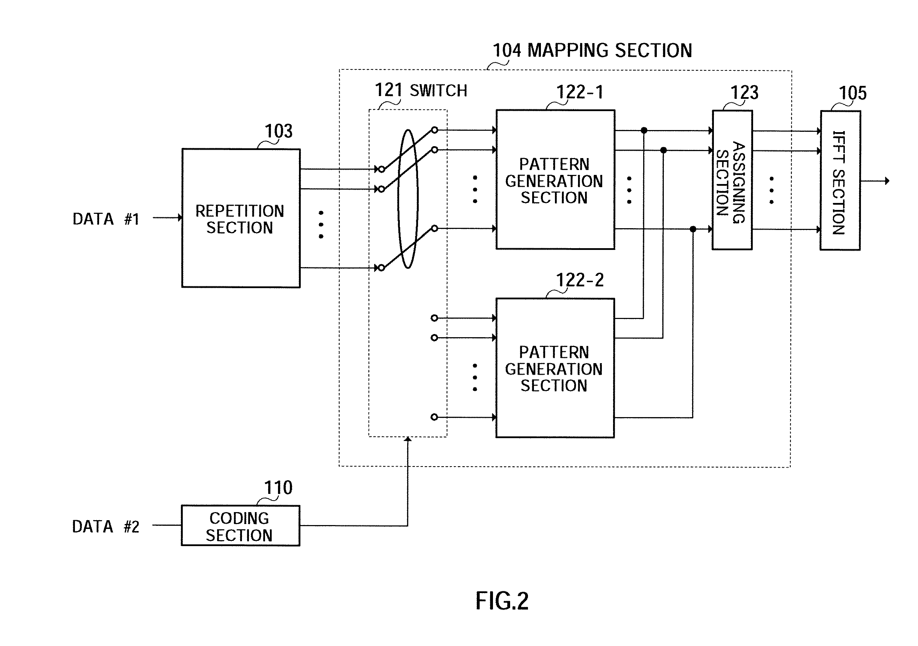

FIG.2 is a block diagram showing a main configuration in above mapping section 104.

Mapping section 104 has: switch 121; pattern generation sections 122 (122-1 and 122-2); and assigning section 123, and, based on coded data of a control channel outputted from coding section 110, switches a plurality of outputs from repetition section 103, generates a plurality of pre-registered repetition patterns and maps data. The operations of each section will be explained below.

Switch 121 switches the output from repetition section 103 to either pattern generation section 122-1 or pattern generation section 122-2, based on coded data #2 outputted from coding section 110. At that time, if using pattern generation section 122-2 as the repetition pattern, for example, all lines of switch 121 switch to pattern generation section 122-2. As a detailed example of operations, for example, if the coded data outputted from coding section 110 is only of two types of "0" and "1" (binary), switch 121 connects the output of repetition section 103 to pattern generation section 122-1 when the coded data outputted from coding section 110 is "0." Also, if the output of coding section 110 is "1," switch 121 connects the output of repetition section 103 to pattern generation section 122-2.

Pattern generation sections 122 have circuits that each correspond to one of a predetermined number of repetition patterns, and each circuit generates the corresponding repetition pattern. Here, the number of repetition patterns is a number that is enough to represent control data depending on the repetition patterns. Here, to simplify the explanation and to facilitate understanding, the explanation provides an example of two repetition patterns--that is, when the data of the control channel is binary--and only two pattern generation sections 122 exist, but this is only an example, a predetermined number of pattern generation sections 122 are arranged to correspond to each repetition pattern in the actual section.

Assigning section 123 arranges output of pattern generation sections 122 to a wireless transmission frame.

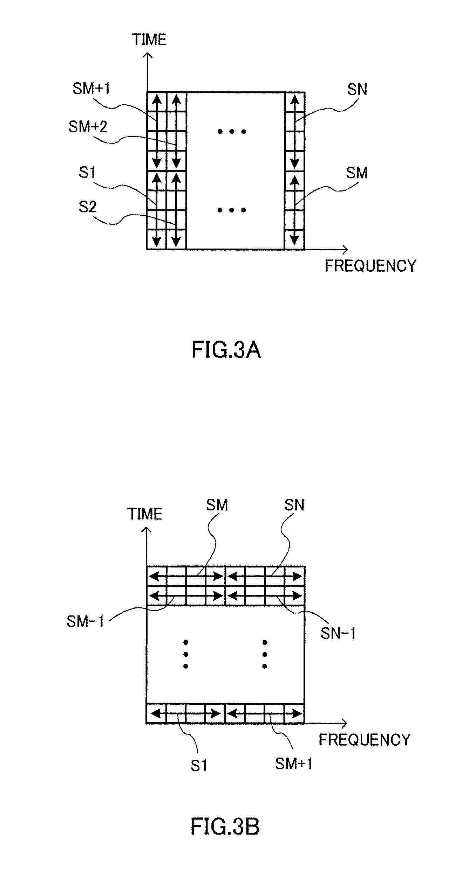

FIGs. 3A and 3B are drawings showing examples of repetition patterns generated by pattern generation sections 122. Note that the explanation will use a case where the same data symbol is replicated into four symbols--that is, a case will be described here where the number of repetitions is four. Also, one block of data representing the same information, generated by repetition (if the number of repetitions is four, data is composed of four data symbols), is called a repetition symbol.

Each pattern generation section 122 generates a plurality of mutually different repetition patterns by using different arrangement method for a plurality of repetition symbols, on a two dimensional plane composed of a time axis and a frequency axis. According to this embodiment, as shown in FIG.3A, pattern generation section 122-1 generates repetition patterns wherein each repetition symbol is oriented to the time domain (longitudinal direction), and each repetition symbol is mutually connected and lined up in a regular order. For example, symbol S1 forms a repetition symbol that is lined up with four of the same data symbols longitudinally. Symbols S2, S3, · · ·, SM, SM+1, SM+2, · · ·, and SN are also the same. As shown in FIG.3B, pattern generation section 122-2 generates repetition patterns wherein each repetition symbol is oriented to the frequency domain (lateral direction), and each repetition symbol is mutually connected and lined up in a regular order. For example, symbol S1 forms a repetition symbol that is lined up with four of the same data symbols laterally. Symbols S2, · · ·, SM-1, SM, SM+1, · · ·, SN-1 and SN are also the same.

Note that in this specification, data composed by symbols S1 to SN--that is, one set of data generated by the same repetition pattern--is called a pattern block.

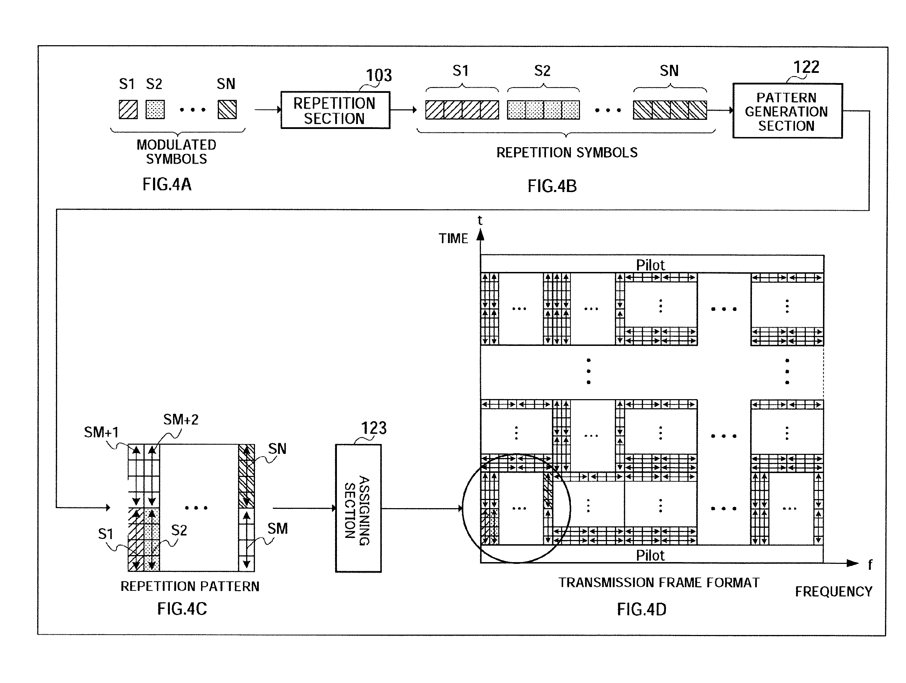

FIG.4 is a drawing to explain how a transmission symbol is processed, by going through each section of transmitting section 100.

Modulated symbols S1, S2, · · · SN (FIG.4A) are replicated (FIG.4B) into a plurality of repetition symbols (here, four symbols) by repetition section 103. Also, as shown in FIG.4C, a pattern block is formed by pattern generation sections 122 and inputted to assigning section 123. Finally, the transmission frame configuration of data outputted from assigning section 123 is arranged as shown in FIG.4D. Specifically, the one frame of transmission data is composed of a plurality of pattern blocks arranged in regular order in the two-dimensional directions of time and frequency.

By adopting this configuration, the repetition pattern of data #1 is determined based on data #2. Therefore, it is determined at the OFDM receiving apparatus that receives the OFDM signal by which pattern the repetition pattern of data #1 was transmitted, thereby making it possible to determine the information representing data #2.

Next, receiving section 150 that performs wireless reception processing of OFDM signals transmitted by wireless from transmitting section 100, will be explained.

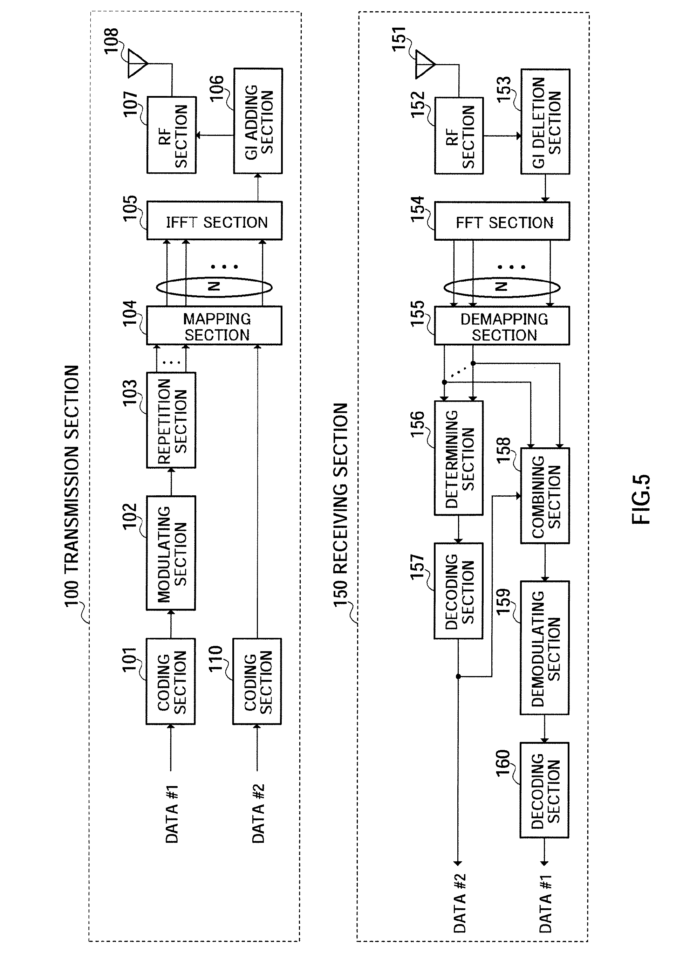

FIG.5 is a block diagram showing a main configuration of receiving section 150 in an OFDM communication apparatus according to this embodiment. Here, an example is provided of receiving section 150 provided in the same OFDM communication apparatus as transmitting section 100 explained above.

Receiving section 150 predicts and determines the repetition pattern expected to be used by the transmitting side, finds the probability of each repetition pattern--that is, the probability (matching probability) that the repetition pattern matches the repetition pattern actually used--and performs a demodulating process of the received signals by using a value that indicates that probability.

To be more specific, receiving section 150 knows all the repetition patterns that can be used by the transmitting side and so attempts pattern matching to received signals using all repetition patterns. The result of pattern matching obtained for each repetition pattern is a correlation value and therefore is a soft decision value, and receiving section 150 performs error correction decoding of multiplex data by using this soft decision value. Also, receiving section 150 performs demodulation of received signals using obtained multiplex data--in other words, control channel information.

By employing the aforementioned configuration, receiving section 150 can extract (decode) control channel information that is multiplex data from received signals, so there is no need to have separate notification of the repetition patterns used, from the transmitting side. Also, it is possible to extract (decode) multiplex data from received signals with little arithmetic processing.

Signals received via antenna 151 are base-band signals wirelessly processed by RF section 152, and the guard interval is deleted by GI deletion section 153, and after fast Fourier transform at FFT section 154, they are inputted to demapping section 155. Demapping section 155 sequentially cuts out the received wireless frame signal into pattern block units and outputs that to determining section 156. In other words, the aforementioned process operates in reverse of the data assigning process of transmitting section 100.

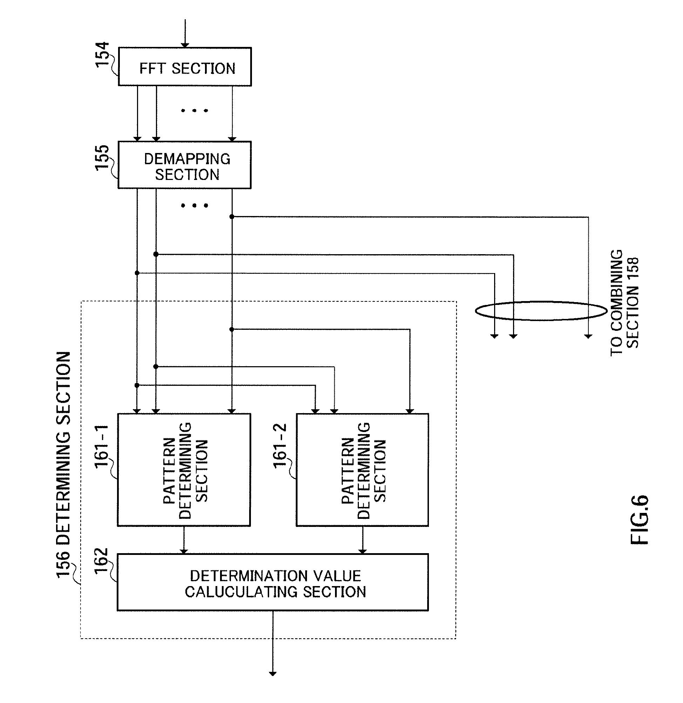

FIG.6 is a block diagram showing a main configuration in determining section 156.

Received signals after GI is removed undergo fast Fourier transform at FFT section 154, are inputted to demapping section 155, and data is extracted from the subcarrier. Output of demapping section 155 is inputted to each of pattern determining section 161-1 and pattern determining section 161-2.

Pattern determining section 161-1 holds pattern information that corresponds to pattern generation section 122-1 of transmitting section 100, and in the same way, pattern determining section 161-2 holds pattern information that corresponds to pattern generation section 122-2 of transmitting section 100. Pattern determining sections 161 (161-1, and 161-2) determine the repetition pattern for the input signals using pattern matching based pattern information they hold, and output a correlation value that is the determination result to determination value calculating section 162.

Determination value calculating section 162 calculates the matching probability of whether the repetition pattern of the transmission signal is "0" or "1, " based on the correlation value outputted from pattern determining sections 161-1 and 161-2, and outputs the result to decoding section 157.

Decoding section 157 performs error correction decoding on the calculated value (soft decision value) of determination value calculating section 162, obtains a hard decision value that is higher-quality data, and outputs that as data #2. At the same time, information indicating whether the hard decision value outputted from decoding section 157--in other words, the repetition pattern of the transmission signal--corresponds to "0" or to "1" and is inputted to combining section 158. Combining section 158 combines the repetition symbols inputted from demapping section 155 in a combining direction based on information from decoding section 157. Received signals after synthesis are demodulated by demodulating section 159, undergo error correction decoding by decoding section 160, and become received data #1.

Next, the determining process of repetition patterns in pattern determining sections 161 will be explained in further detail. Note that pattern determining section 161-1, corresponds to repetition patterns in the longitudinal direction, and pattern determining section 161-2 corresponds to repetition patterns in the lateral direction. Also, the transmission signal is formed by the longitudinal direction repetition pattern at pattern generation section 122-1.

Pattern determining section 161-1 performs in-phase addition on the received signals after channel compensation with the repetition pattern at the longitudinal direction, and performs pattern matching. In the same way, pattern determining section 161-2 performs in-phase addition to the repetition pattern at the lateral direction, and performs pattern matching. The result is that the transmission signal is formed by the repetition pattern of the longitudinal direction at pattern generation section 122-1 so the repetition pattern conforms to the output results of pattern determining section 161-1 indicating a high correlation value. The repetition pattern does not conform to the output results of pattern determining section 161-2, so it indicates a low correlation value. The correlation value obtained by this pattern matching undergoes scale adjustments, etc. at determination value calculating section 162 to obtain the matching probability above.

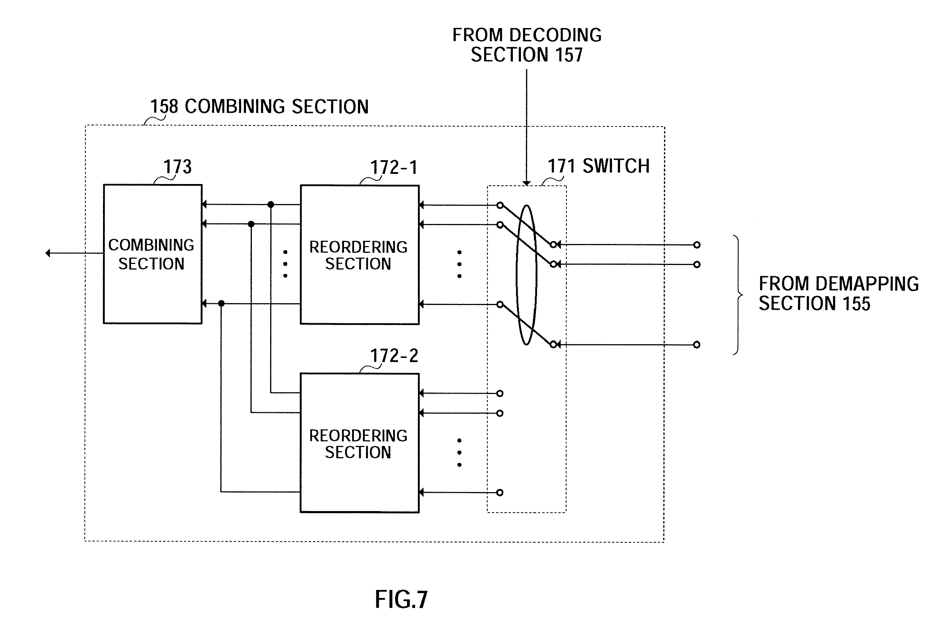

FIG.7 is a block diagram showing a main configuration in combining section 158.

The repetition symbol inputted from demapping section 155 is switched at reordering section 172-1 or reordering section 172-2, in switch 171 based on input from decoding section 157, and outputted. By being reordered at either reordering section, the repetition symbol is restored to data prior to repetition (replication) at combining section 173 that differs longitudinally or laterally. In other words, because the output (data #2) of decoding section 157 itself is repetition pattern information of the transmission signal, the repeated received signal is combined based on this information, thereby increasing the reception quality SNR (or SINR).

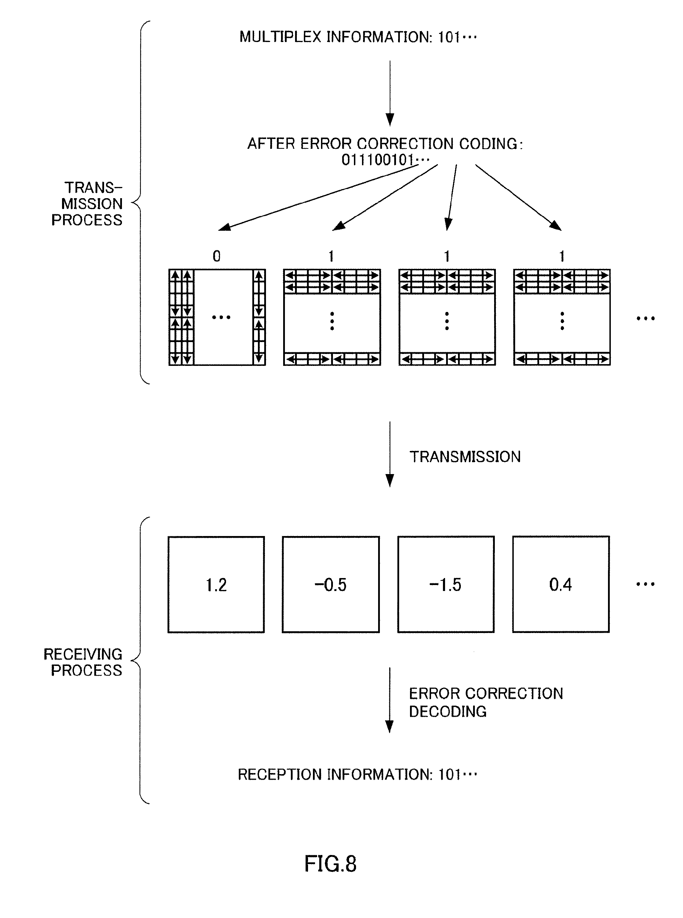

FIG.8 is a drawing to explain a series of transmitting and receiving processes of transmitting section 100 and receiving section 150 for data #2.

At transmitting section 100, data #2 is coded and to become a coded sequence. The repetition pattern of data #1 is determined according to the coded sequence. In other words, if the coded sequence of data #2 is "0, " data #1 becomes repetition pattern of the longitudinal direction and is transmitted. If the coded sequence of data #2 is "1," data #1 becomes repetition pattern of the lateral direction and is transmitted.

At determining section 156 of receiving section 150, a matching process is applied with the repetition pattern of both the longitudinal and lateral directions for each of the pattern blocks of the received signals to calculate the soft decision value and indicate which repetition pattern has a higher probability. In this case, it is designed so that if the probability of the repetition pattern of the longitudinal direction is higher, this becomes soft decision value added with a (+) plus code isobtained. If the probability of the repetition pattern of the lateral direction is higher, a soft decision value added with a (-) minus code is obtained. Decoding section 157 performs soft decision error correction decoding directly using this soft decision value, and finallymakes a hard decision of the decoding result to obtain data #2. Here, a reason for performing soft decision error correction decoding is that generally soft decision error correction decoding has superior error correction capabilities than hard decision error correction decoding. Also, because the correlation value obtained by pattern matching using repetition patterns is a soft decision value, there is the merit that it is possible to directly use the soft decision value in error correction decoding.

In this way, according to this embodiment, a plurality of repetition patterns that correspond respectively to control information, are prepared for control information, and data of the data channels is subjected to repetition and transmitted according to these repetition patterns. This makes it possible to transmit control information without assigning resources of the communication system for use in transmission of the control channel, so that it is possible prevent a drop in throughput of the communication system.

The communication channels in a wireless communication system are generally classified into a data channel and control channel, but the control channel is one that is required in controlling the transmission of a data channel, and the data channel is information necessary for correct demodulation in a receiving apparatus. However, the control channel itself is not information that the user of the wireless transmitting apparatus desires to transmit but is information that is additionally required. Therefore, with the present invention, a channel other than the data channel, as typified by this control channel, is made to correspond to the control information of the plurality of repetition patterns used data channel repetition to transmit the data channel. In other words, the control channel is multiplexed with data channel by the repetition pattern and transmitted.

To express this another way, in this invention, until the transmission process is started, two channels exist, namely the data channel and the control channel, but when mapping data in mapping section 104, the control channel is multiplexed to the data channel, appearing as though there is only one data channel. Therefore, it appears that only the data channel is being transmitted over air where wireless signals are transmitted.

The reason for focusing on representing the control channel by a repetition pattern is that as there is the concern for consuming resources of the communication system by setting many types of repetition patterns, the amount of information for the control channel is low compared to the data channel. Therefore, it was noted that it is possible to represent the control channel using few repetition patterns. Also, the control channel itself has information important (this channel has the quality that if reception fails, demodulation itself of the data channel will not be possible) to the receiving apparatus, so there are many cases in which a modulation scheme in which reception errors do not easily occur (strong reception error tolerance) is employed. For example, rather than a high-transmission rate modulation scheme such as 16QAM, a modulation scheme such as BPSK is often used. As for the repetition pattern, it is acceptable if the receiving side can determine how a predetermined code is repeated, and so the tolerance for reception errors is high. This is one reason that in the present invention the control channel is represented with repetition pattern.

Note that with this embodiment, the explanation employs an example where each repetition symbol is lined up in regular order, as shown in FIG' s. 3A and 3B, to form one repetition pattern, but it is not necessary to always line up each repetition symbol in regular order into one repetition pattern. For example, after generating repetition patterns, it is acceptable to interleave the repetition pattern itself, and change the arrangement of each data symbol in one repetition pattern. At that time, in the finally obtained repetition pattern, the repetition symbols composed of the same data are discretely arranged. Also, it is also possible to separate a plurality of different interleave patterns for use according to the circumstances. However, whatever repetition pattern is used on the transmitting side, it is necessary for the receiving side to ascertain the repetition pattern--that is, how the repetition symbols are arranged on the two-dimensional plane composed of a time axis and a frequency axis.

This explanation of this embodiment uses an example of data #2 being binary of "0" and "1" but is not limited to binary. For example, data #2 can be data composed of 4 values of "00, " "01, " "10, " and "11, " and this data #2 can be multiplexed upon data #1. In such cases, as an example of the repetition pattern, it is possible that each repetition symbol can use four types different patterns arranged in directions that are longitudinal, lateral, obliquely rising to the right, and obliquely rising to the left.

Also, with this embodiment, the explanation uses an example of the number of repetitions being 4, but the number of repetitions is not limited thereto.

Also, with this embodiment, the explanation uses an example of the pattern block having a shape close to a square--that is, the data length in the time domain and the data length in the frequency domain are equivalent--but it is acceptable for the pattern block shape to be rectangular.

Also, because the control channel does not need to be transmitted, the amount of communication system resource consumption is reduced. Therefore, these resources that are not being used in transmission can be applied to other uses. Specifically, they can perform error correction coding on the data channel. If so, by performing error correction, it is possible to transmit high-quality multiplexed data even in low SNR.

Also, in principle, by applying various changes to the repetition pattern, it is possible to multiplex not only the control channel, but the data channel as well. According to that configuration, it is possible to further increase the amount of data transmitted without consuming resources, so that it is possible to further improve throughput of the communication system.

Also, according to this embodiment, the explanation uses an example where pattern matching is tried with the received signals using all repetition patterns at receiving section 150, and error correction decoding is performed on multiplexed data using the soft decision value obtained. However, a configuration for hard decision of soft decision values obtained with the pattern matching is possible. In that case, it is acceptable to perform error correction decoding of multiplexed data using the hard decision value obtained by the hard decision, and not to perform error correction decoding on multiplexed data at all. Furthermore, by employing the aforementioned configuration, the error correction capability drops in comparison to the configuration described in relation to this embodiment, but it is possible to extract multiplex data from received signals.

### (Embodiment 2)

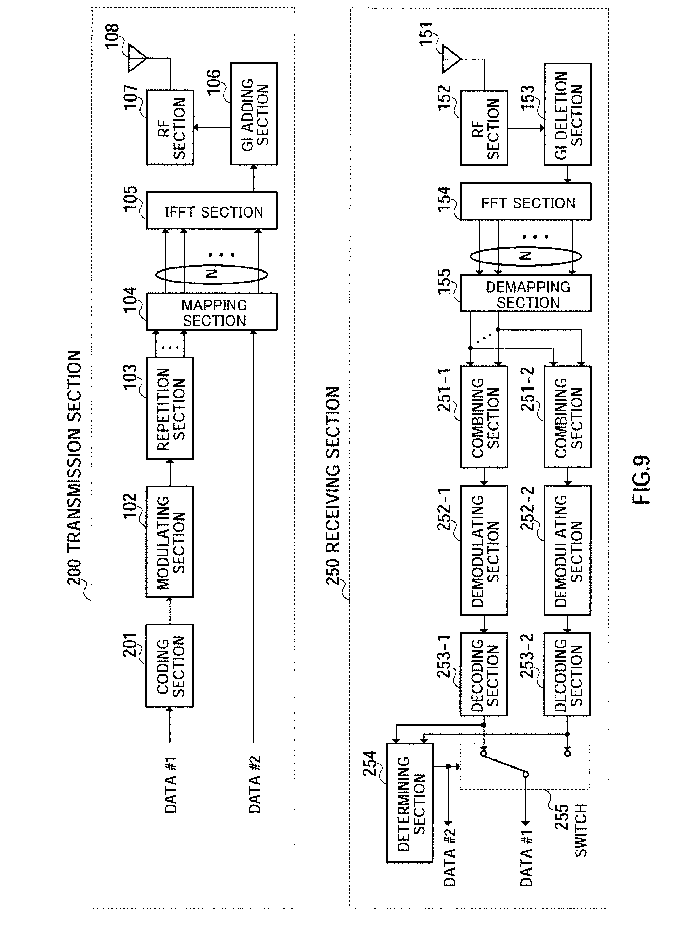

FIG. 9 is a block diagram showing a main configuration of transmitting section 200 and a receiving section 250 of an OFDM communication apparatus according to a second embodiment of the present invention. Note that transmitting section 200 and receiving section 250 have basically the same configuration as transmitting section 100 and receiving section 150 of the first embodiment. Therefore, the components that are the same have the same reference numerals and explanations thereof will be omitted.

According to this embodiment, transmitting section 200 performs error correction coding in pattern block units, and receiving section 250 attempts decoding using all repetition patterns in pattern block units to extract multiplexed data. In other words, transmitting section 200 adds CRC (Cyclic Redundancy Check) code for each pattern block, and receiving section 250 performs CRC determination for each pattern block. If the CRC determination is OK, it determines that the repetition pattern of the pattern block is the repetition pattern that was actually transmitted. In other words, receiving section 250 performs the repetition pattern determination that should be used by the transmitting side, in the same way as was described in relation to the first embodiment. Conversely, it does not perform determination using pattern matching with the received signals as was done in the first embodiment, but it demodulates using all repetition patterns and performs determination of the repetition patterns using signals after decoding. This improves determining accuracy of the repetition pattern and reduces reception errors of the control channel.

Note that the differences between transmitting section 200 and transmitting section 100 described in relation to the first embodiment are that there is no coding section for coding data #2 that is multiplexed data, and the operations of the coding section that processes data #1.

The operations of transmitting section 200 will be explained.

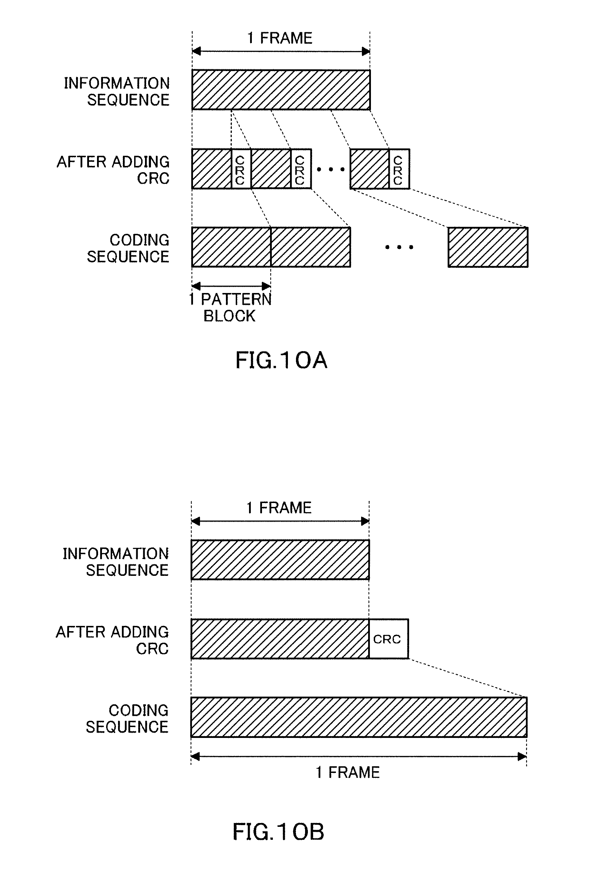

FIG's. 10A and 10B are drawings to explain internal processes of coding section 201. FIG.10A shows a configuration of a signal generated by coding section 201. Note that for comparison, FIG.10B shows a configuration of a signal generated by coding section 101 of the first embodiment.

In coding section 101, a CRC code is added to all information sequence, and error correction coding is performed on the entire sequence after the CRC code is added. Note that the length of the code sequence is a length that can fit one wireless frame. However, at coding section 201, the information sequence is further segmented. The CRC code is added in segmented pattern block units, and the error correction coding process is performed in pattern block units after adding the CRC code. Mapping section 104 changes the repetition pattern in pattern block units after coding. The method for changing the repetition pattern is performed based on the value of data #2, in the same way as the first embodiment.

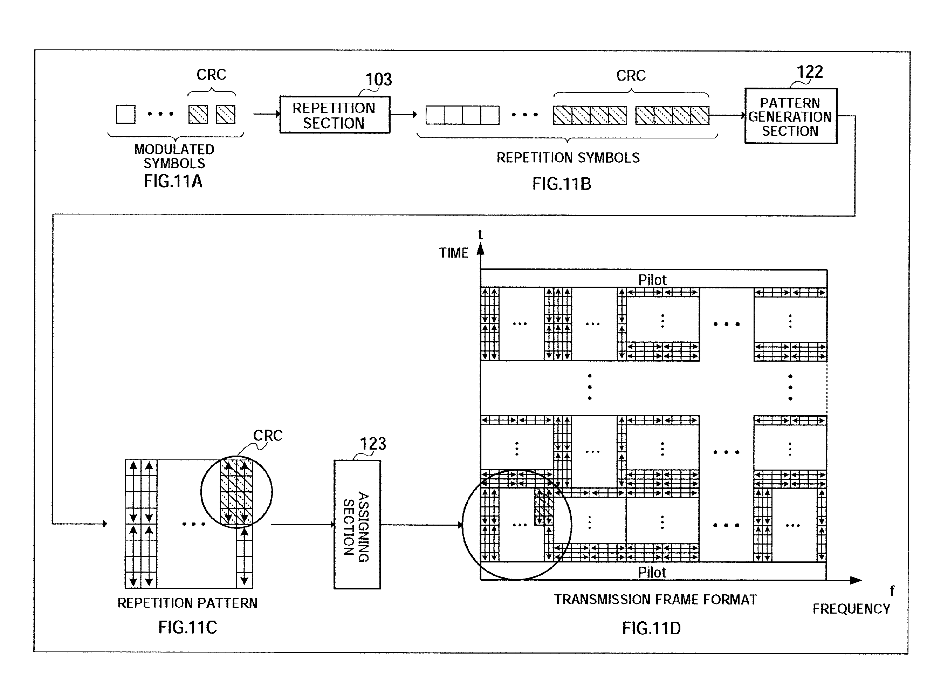

FIG.11 is a drawing to explain how a transmission symbol is processed, by going through each section of transmitting section 200.

The modulated symbol appended with the CRC code (FIG.11A) is replicated to a plurality of repetition symbols at repetition section 103 (FIG.11B). Also, as shown in FIG. 11C, a repetition pattern is formed by pattern generation sections 122 and inputted to assigning section 123. Finally, the transmission frame configuration of data symbols from assigning section 123 is as shown in FIG.11D.

Next, receiving section 250 will be explained.

Demapping section 155 cuts out pattern block units from the wireless frame, in the same way as was described in relation to the first embodiment, and outputs that to two systems of combining sections 251-1 and 251-2. Combining section 251-1 combines repetition symbols based on the repetition pattern generated by pattern generation section 122-1 of transmitting section 200. Also, combining section 251-2 combines repetition symbols based on the repetition pattern generated by pattern generation section 122-2 of transmitting section 200. For example, if pattern generation section 122-1 is the repetition pattern in the longitudinal direction, combining section 251-1 combines repetition symbols in the longitudinal direction. In the same way, if pattern generation section 122-2 is the repetition pattern in the lateral direction, combining section 251-2 combines repetition symbols in the lateral direction. The output of combining sections 251-1 and 251-2 is inputted to demodulation sections 252-1 and 252-2, and error correction decoding is applied by decoding sections 253-1 and 253-2 after demodulation. Determining section 254 performs CRC determination for output from each of the decoders, and if the results of CRC determination are OK, it switches switch 255 to employ the sequence as data #1. Also, determining section 254 outputs signals that correspond to the CRC determination results as data #2. Specifically, in the same way as with the first embodiment, when using a method for repetition pattern generation ("0" is repetition in the longitudinal direction, and "1" is repetition in the lateral direction), if the CRC determination results of combining section 251-1 are OK, "0" is outputted, and if the CRC determination results of combining section 251-2 are OK, "1" is outputted.

Thus, according to this embodiment, it is possible to transmit control information without assigning resources of the communication system for use in transmission of the control channel, so that it is possible prevent a drop in throughput of the communication system. This improves determining accuracy of the repetition pattern and reduces reception errors of the control channel.

Note that according to this embodiment, the explanation used an example of using the CRC code as a determination standard in determining section 254, but it is also acceptable to use a soft decision output of decoding sections 253-1 and 253-2.

### (Embodiment 3)

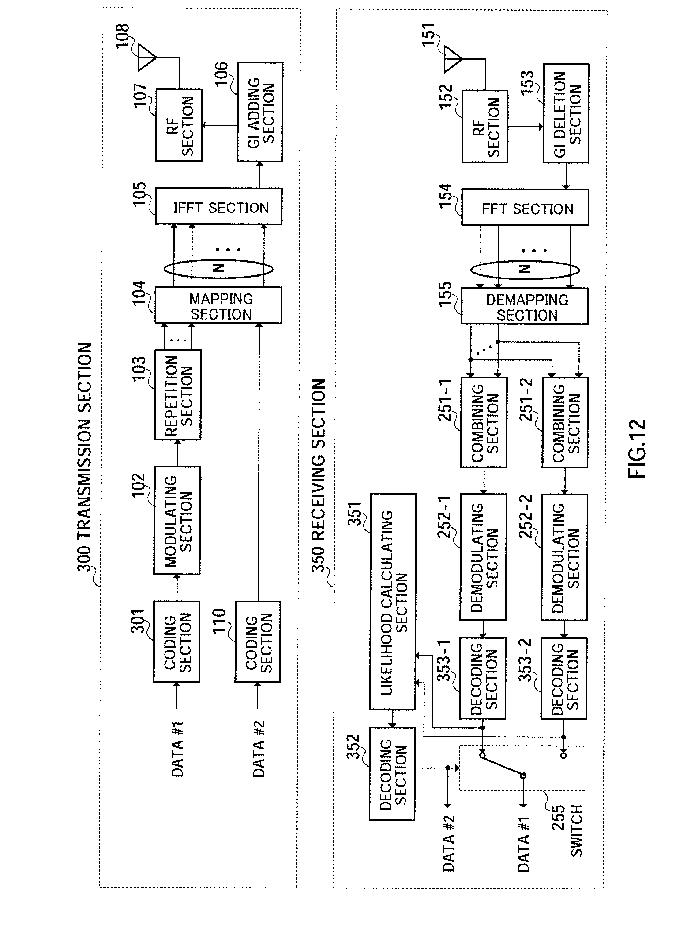

FIG.12 is a block diagram showing a main configuration of transmitting section 300 and receiving section 350 of an OFDM communication apparatus according to a third embodiment of the present invention. Note that transmitting section 300 and receiving section 350 have basically the same configuration as transmitting section 200 and receiving section 250 of the second embodiment. Therefore, the components that are the same have the same reference numerals, and explanations thereof will be omitted.

According to this embodiment, transmitting section 300 performs error correction coding in pattern block units. However, differing from the second embodiment, one CRC code is appended to one transmission frame without appending a CRC code for each pattern block. Receiving section 350 tries error correction decoding using all repetition patterns in pattern block units. However, focus is made on the fact that this decoding signal is likelihood information of each repetition pattern and the decoding process is performed in one frame units using that likelihood information to obtain the final multiplexed data (control data) without determining which repetition pattern is correct at the stage of the decoding signal obtained by error correction decoding. In other words, a two-stage decoding process of decoding in pattern block units and decoding in frame units, is performed. This improves determining accuracy of the repetition pattern and reduces reception errors of the control channel.

The difference with the second embodiment is that coding section 301 is provided at transmitting section 300 in place of coding section 201, and decoding sections 353-1 and 353-2 are provided at receiving section 350 in place of decoding sections 253-1 and 253-2, and likelihood calculating section 351 is provided in place of determining section 254, and still further, decoding section 352 is added. This decoding section 352 performs decoding that corresponds to coding section 110.

First, coding section 301 that corresponds to data #1 in transmitting section 300 will be explained.

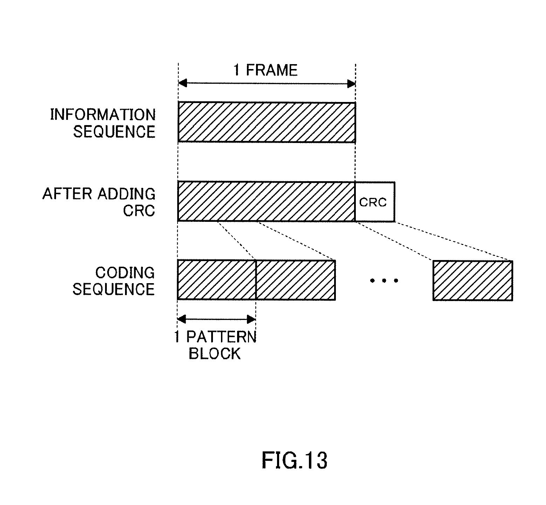

The information sequence is further segmented at coding section 301, and the application of the error correction coding process on segmented pattern block units is the same as that of coding section 201 of the second embodiment. The difference from the second embodiment is that the CRC code is not added in pattern block units (it is added in frame units). The subsequent processes are the same as described in relation to the second embodiment. FIG.13 shows a configuration of a signal generated by coding section 301.

The following will explain decoding sections 353-1 and 353-2 in reception section 350, likelihood calculating section 351, and decoding section 352.

Decoding sections 353-1 and 353-2 perform the same operations. These decoding sections perform the decoding process in pattern block units, and output obtained decoding signals to likelihood calculating section 351. Demodulated signals having different combined patterns are inputted to decoding sections 353-1 and 353-2. Therefore, it is possible to obtain highly reliable decoding results by decoding a demodulated signal combined by a pattern that matches the repetition pattern transmitted from transmitting section 300, but conversely, even if applying a decoding process on a demodulated signal combined by a pattern that differs from the repetition pattern that was transmitted, only low-reliability decoding results can be obtained. In other words, the decoding signal obtained by decoding sections 353-1 and 353-2 is a soft decision value, and is likelihood information of each repetition pattern. Therefore, by further performing soft decision error correction decoding in frame units, using this likelihood information as it is, it is possible to decode data #2. Likelihood calculating section 351 generates input signals to decoding section 352 of the data #2 from the reliability information (likelihood information) outputted from each of decoding sections 353-1 and 353-2 and outputs that to decoding section 352. Decoding section 352 performs error correction decoding using the likelihood information outputted from likelihood calculating section 351, and outputs the data #2 sequence. Switch 255 switches output from decoding sections 353-1 and 353-2 based on decoding results of decoding section 352--that is, based on data #2--and outputs data #1 . Note that decoding section 352 is provided with the same coding processing functions as transmitting section 300.

Thus, according to this embodiment, it is possible to transmit control information without assigning resources of the communication system for use in transmission of the control channel, so that it is possible prevent a drop in throughput of the communication system. This improves determining accuracy of the repetition pattern and reduces reception errors of the control channel.

Note that with this embodiment, the coding process of data #1 of transmitting section 300 has a configuration that does not add the CRC code to segmented pattern block units. However, as shown in the second embodiment, it is acceptable to add the CRC code for each pattern block, perform CRC determination at repetition section 350 from the output results of decoding sections 353-1 and 353-2 and use the hard decision value as input of decoding section 352.

The first to the third embodiments of the present invention have been explained.

The OFDM transmitting apparatus and OFDM receiving apparatus of the present invention are not limited to the first to the third embodiments described above, and various changes can be applied thereto.

The OFDM transmitting apparatus and OFDM receiving apparatus of the present invention can be provided in communication terminal apparatuses and base station apparatuses in mobile communication systems. This provides communication terminal apparatuses and base station apparatuses in mobile communication systems having the same effect described above.

Note that the explanation uses an example of the invention configured in hardware, but it is also possible to implement the present invention using software. For example, the algorithm of the OFDM transmission method of the present invention can be described using a programming language, by storing this program in a memory and executing it by an information processing means, it is possible to implement the same functions of the OFDM transmitting apparatus of the present invention.

Each function block employed in the description of each of the aforementioned embodiments may typically be implemented as an LSI constituted by an integrated circuit. These may be individual chips or partially or totally contained on a single chip.

"LSI" is adopted here but this may also be referred to as "IC", "system LSI", "super LSI", or "ultra LSI" depending on differing extents of integration.

Further, the method of circuit integration is not limited to LSI's, and implementation using dedicated circuitry or general purpose processors is also possible. After LSI manufacture, utilization of an FPGA (Field Programmable Gate Array) or a reconfigurable processor where connections and settings of circuit cells within an LSI can be reconfigured is also possible.

Further, if integrated circuit technology comes out to replace LSI's as a result of the advancement of semiconductor technology or a derivative other technology, it is naturally also possible to carry out function block integration using this technology. Application in biotechnology is also possible.

The present application is based on Japanese patent applicationNo.2004-225676, filed August 2, 2004, the entire content of which is expressly incorporated herein by reference.

### Industrial Applicability

The OFDM transmitting apparatus and OFDM receiving apparatus according to the present invention are suitable for use as communication terminal apparatus or base station apparatus in a mobile communication system.

## Claims

1. An OFDM transmitting apparatus comprising:
a determining section that determines a repetition pattern for first information according to content of second information; and
a transmitting section that performs repetition of the first information in the repetition pattern and transmits a result.

2. An OFDM transmitting apparatus comprising:
a replicating section that replicates a data symbol of a data channel into a plurality of data symbols and generates a repetition symbol;
a determining section that determines a repetition pattern of the repetition symbol, said pattern being an arrangement in a two-dimensional plane composed of a time axis and a frequency axis, according to content of control information of the data channel; and
an assigning section that assigns the repetition symbol to a transmitting subcarrier based on the repetition pattern.

3. The OFDM transmitting apparatus according to claim 2, further comprising a coding section that performs error correction coding on the data channel.

4. The OFDM transmitting apparatus according to claim 2, further comprising an adding section that adds a CRC (Cyclic Redundancy Check) code to a group of a plurality of repetition symbols arranged in a same repetition pattern in the determining section.

5. An OFDM receiving apparatus comprising:
a determining section that determines a repetition pattern used for a received signal, using a plurality of predetermined repetition patterns, and extracts control information of the received signal based on a determination result; and
a combining section that combines a data channel signal from the received signal, using determined repetition pattern.

6. The OFDM receiving apparatus according to claim 5, wherein the determining section comprises:
a comparing section that compares the received signal to each of the plurality of predetermined repetition patterns;
a calculating section that calculates a soft decision value corresponding to the control information, from a comparison result in the comparing section; and
a decoding section that performs soft decision error correction decoding on the control information using the soft decision value.

7. An OFDM receiving apparatus comprising:
a combining section that combines a plurality of data channel signals from received signals, using a plurality of predetermined repetition patterns;
a determining section that determines a repetition pattern used for a received signal, using the plurality of data channel signals, and extracts control information of the received signal based on a determination result; and
a selecting section that selects a data channel signal corresponding to a determined repetition pattern, from the plurality of data channel signals.

8. The OFDM receiving apparatus according to claim 7, wherein:
the determining section comprises:
a decoding section that performs error correction decoding on the plurality of data channel signals and obtains a plurality of decoded signals; and
a CRC determining section that performs CRC determination on the plurality of decoded signals, and extracts the control information based on this CRC determination result; and
the selecting section selects one from the plurality of decoded signals according to the CRC determination result.

9. The OFDM receiving apparatus according to claim 7, wherein:
the determining section comprises:
a first decoding section that performs error correction decoding on the plurality of data channel signals and obtains a plurality of decoded signals;
a calculating section that calculating a soft decision value corresponding to the control information, from the plurality of decoded signals; and
a second decoding section that performs soft decision error correction decoding on the control information using the soft decision value, and obtains decoded signals of the control information; and
the selecting section selects one from the plurality of decoded signals obtained by the first decoding section, based on the decoded signals obtained by the second decoding section.

10. A communication terminal apparatus comprising the OFDM transmitting apparatus of claim 1.

11. A base station apparatus comprising the OFDM transmitting apparatus of claim 1.

12. A communication terminal apparatus comprising the OFDM receiving apparatus of claim 5.

13. A base station apparatus comprising the OFDM receiving apparatus of claim 5.

14. A communication terminal apparatus comprising the OFDM receiving apparatus of claim 7.

15. A base station apparatus comprising the OFDM receiving apparatus of claim 7.

16. An OFDM transmission method comprising the steps of:
determining a repetition pattern of a data channel according to content of control information of the data channel; and
performing repetition of the data channel in the repetition pattern and transmitting a result.

17. An OFDM receiving method comprising the steps of:
determining a repetition pattern used in received signal, using a plurality of predetermined repetition patterns;
extracting control information of the received signal, based on a determination result; and
combining a data channel signal from the received signal, using the determined repetition pattern.

18. An OFDM receiving method comprising the steps of:
combining a plurality of data channel signals from received signals, using a plurality of predetermined repetition patterns;
determining a repetition pattern used in a received signal, using the plurality of data channel signals;
extracting control information of the received signal, based on the determination result; and
selecting a data channel signal corresponding to a determined repetition pattern, from the plurality of data channel signals.
